# EUROPÄISCHE PATENTSCHRIFT

(11) **EP 3 292 575 B1**
(45) Veröffentlichungstag und Bekanntmachung des Hinweises auf die Patenterteilung: **27.03.2019**
(21) Anmeldenummer: 16725772.4
(22) Anmeldetag: 03.05.2016
(51) Int. Cl.: H01M 2/12, F16K 24/04, H01G 9/12, H02B 13/025, F16K 31/126, F16K 7/12, F16K 17/16, F16K 17/164, H01G 11/18, H01G 11/78

(54) **GEHÄUSE MIT ÜBERDRUCKSICHERUNG**
HOUSING WITH PRESSURE REGULATION
BOÎTIER AVEC SÉCURITÉ CONTRE LA SURPRESSION

(30) Priorität: 07.05.2015 DE 102015208544
(43) Veröffentlichungstag der Anmeldung: 14.03.2018
(73) Patentinhaber: Trelleborg Sealing Solutions Germany GmbH, 70565 Stuttgart (DE)
(72) Erfinder: BAUER, Jürgen, 72135 Dettenhausen (DE)
(74) Vertreter: Kohler Schmid Möbus Patentanwälte
(86) Internationale Anmeldenummer: PCT/EP2016/059811
(87) Internationale Veröffentlichungsnummer: WO 2016/177687

(56) Entgegenhaltungen:
- US-A- 2 227 319
- US-A- 2 766 408

## Beschreibung

Die Erfindung betrifft ein Gehäuse mit einer Überdrucksicherung. Derartige Gehäuse werden in der Praxis in vielen technischen Bereichen eingesetzt, um das Gehäuse bzw. dessen Inhalt vor einem schädigenden Überdruck zu schützen. Als Überdrucksicherung werden dabei häufig Sicherheitsventile oder sogenannte Berstscheiben eingesetzt, die bei Erreichen oder Überschreiten eines maximal zulässigen Gehäuseinnendrucks ansprechen und dadurch den Abbau des Gehäuseinnendrucks durch Abblasen eines im Gehäuseinneren angeordneten Fluids in die Umgebung erlauben. Sicherheitsventile schließen bei einem Abfall des Gehäuseinnendrucks in der Regel selbsttätig, so dass das Gehäuse ggf. ohne weitere Maßnahmen weiterverwendet werden kann. Berstscheiben werden demgegenüber durch ihrem Ansprechen auf einen unerlaubten Gehäuseinnendruck im Sinne einer Sollbruchstelle zerstört und müssen zur Weiterverwendung des Gehäuses ersetzt werden.

Sicherheitsventile und auch Berstscheiben sind in ihrer Herstellung bzw. Montage aufwändig und stellen deshalb einen nicht zu vernachlässigenden Kostenfaktor dar.

Aus der US 2 227 319 A ist ein Gehäuse mit einer Überdrucksicherung, umfassend eine Druckentlastungsöffnung, die sich vom Gehäuseinneren zur Gehäuseaußenseite erstreckt, und einen Membrandichtstopfen, der in der Druckentlastungsöffnung im Dichtsitz angeordnet ist, um diese fluiddicht zu verschließen. Der Membrandichtstopfen weist einen abgewinkelten freien Randabschnitt auf, über den der Membrandichtstopfen in einer zur Mittelachse des Membrandichtstopfens radialen Richtung an einer die Druckentlastungsöffnung begrenzenden Gehäusewandung vollumfänglich dichtend anliegt. Kommt es bei dem Membrandichtstopfen zu einem Verkleben mit dem Gehäuse, so ist eine zuverlässige Entlüftung des Gehäuseinneren durch den Membrandichtstopfen bei Erreichen oder Überschreiten eines vorgegebenen Grenzdrucks nicht gewährleistet.

Ein weiteres Gehäuse mit einer Überdrucksicherung mit einem Membrandichtstopfen ist aus der US 2 766 408 A bekannt geworden.

Dichtstopfen aus einem gummielastisch verformbaren Material, die in der Druckentlastungsöffnung im radialen Presssitz angeordnet werden, bislang kein geeigneter Ersatz für die vorgenannten Berstscheiben bzw. Sicherheitsventile, weil deren Ansprechverhalten, insbesondere bei einem niedrigen maximal zulässigen Gehäuseinnendruck, bislang nicht zuverlässig genug ist.

Es ist deshalb die Aufgabe der Erfindung, ein Gehäuse mit einer Überdrucksicherung mit einer Druckentlastungsöffnung und einem Membrandichtstopfen anzugeben, das auf einfache und kostengünstige Weise zu fertigen ist und bei dem der Membrandichtstopfen selbst bei geringen Gehäuseinnendrücken ein zuverlässiges Ansprechverhalten aufweist, so dass das Gehäuse auch bei kritischen Anwendungen, beispielsweise als Batteriegehäuse für Lithium-Batterien oder dergleichen, eingesetzt werden kann.

Diese Aufgabe wird durch ein Gehäuse mit den in Patentanspruch 1 angegebenen Merkmalen gelöst. Vorteilhafte Weiterbildungen der Erfindung sind in der Beschreibung sowie den Unteransprüchen angegeben.

Das erfindungsgemäße Gehäuse weist eine Überdrucksicherung mit einer Druckentlastungsöffnung auf, die sich vom Gehäuseinneren bzw. einer Gehäuseinnenseite zur Gehäuseaußenseite erstreckt. In der Druckentlastungsöffnung ist ein Membrandichtstopfen aus einem gummielastisch verformbaren Material im Dichtsitz angeordnet, der die Druckentlastungsöffnung fluiddicht verschließt. Der Membrandichtstopfen weist einen Zentralabschnitt und einen abgewinkelten Randabschnitt auf, der sich im nicht-druckbelasteten Betriebszustand des Membrandichtstopfens vom Zentralabschnitt in Richtung der Gehäuseaußenseite wegerstreckt. Der Randabschnitt schließt somit mit dem Zentralabschnitt im druckunbelasteten Zustand einen Winkel ≤ 180°, vorzugsweise ungefähr 90°, ein.

Der Membrandichtstopfen liegt über den Randabschnitt in einer zur Mittelachse des Membrandichtstopfens radialen Richtung an einer die Druckentlastungsöffnung begrenzenden Gehäusewandung vollumfänglich dichtend an. Der Membrandichtstopfen ist mit anderen Worten als ein Radialdichtungselement ausgebildet.

Der Zentralabschnitt des Membrandichtstopfens ist durch einen steigenden Gehäuseinnendruck (Pi) in axialer Richtung derart verformbar, dass der Randabschnitt durch eine aus der Verformung des Zentralabschnitts abgeleitete Zugspannung Z druckproportional in axialer Richtung von innen nach außen fortschreitend von der Gehäusewandung ablösbar ist, bis der Membrandichtstopfen die Druckentlastungsöffnung bei Erreichen oder Überschreiten eines vorgegebenen maximalen Gehäuseinnendrucks Pi freigibt.

Durch die Verformung, beispielsweise teleskopartige Ausstülpung des Zentralabschnitts durch den an der Gehäusewandung (noch) anliegenden freien Randabschnitt, wird auf den freien Randabschnitt eine Zugspannung ausgeübt, durch die der Randabschnitt - druckproportional - sukzessive von der Gehäusewandung abgeschält wird. Die Zugspannung weist eine radial gerichtete und eine axial (zur Gehäuseaußenseite) gerichtete Komponente auf. Durch die Zugspannung kann ein zwischen dem Randabschnitt und der Gehäusewandung existierender Reibschluss für eine Druckentlastung des Gehäuseinneren auf zuverlässige Weise überwunden werden und der Randabschnitt über den Zentralabschnitt aus der Druckentlastungsöffnung bewegt werden. Insgesamt kann dadurch ein bislang unerreicht feinfühliges und präzises Ansprechverhalten der Überdrucksicherung realisiert werden. In Abhängigkeit von der Materialwahl und der eingesetzten Materialstärke des Membrandichtstopfens kann selbst ein maximaler Gehäuseinnendruck, der den atmosphärischen Umgebungsdruck (Atmosphärendruck) nur geringfügig (um wenige Zehntel bzw. Hundertstel Bar) überschreitet, eine zuverlässige Druckentlastung des Gehäuseinneren gewährleistet werden kann. Der gummielastisch verformbare Membrandichtstopfen kann dabei im Vergleich zu Sicherheitsventilen bzw. Berstscheiben vereinfacht und auf kostengünstige Weise gefertigt sowie am Gehäuse montiert werden. Es versteht sich, dass der Membrandichtstopfen nach seinem einmaligen Ansprechen auf einen Gehäuseüberdruck erneut in die Druckentlastungsöffnung in seine Dichtposition eingesetzt bzw. in einer den Berstscheiben entsprechenden Weise ausgetauscht werden muss.

Eine besonders zuverlässige Abdichtung des Gehäuseinneren gegenüber der Umgebung wird nach der Erfindung dadurch erreicht, dass eine radiale Kontaktpressung des Randabschnitts gegen die Gehäusewandung im nicht-druckbelasteten Zustand des im Dichtsitz angeordneten Membrandichtstopfens axial in Richtung der Gehäuseinnenseite ansteigt. Die Kontaktpressung bzw. der Kontaktpressungsverlauf weist in diesem Fall in axialer Richtung nahe dem Gehäuseinneren ein Maximum auf.

Für ein ganz besonders feinfühliges und zuverlässiges Ansprechverhalten des Membrandichtstopfens erstreckt sich der Randabschnitt des Membrandichtstopfens im druckunbelasteten Zustand des Membrandichtstopfens in axialer Richtung bis zur Gehäuseaußenseite bzw. im Wesentlichen bis zur Gehäuseaußenseite. Alternativ kann der freie Randabschnitt im nicht-druckbelasteten Zustand auch über die Gehäuseaußenseite hervorstehen. Dadurch kann der freie Randabschnitt des Membrandichtstopfens bei Erreichen des vorgegebenen maximalen Gehäuseinnendrucks über eine Gehäusekante, über die die Gehäusewandung und die Gehäuseaußenseite zusammenstoßen, mit unterstützender Wirkung des elastischen Rückstellbestrebens des Membrandichtstopfens, vereinfacht vollständig aus der Druckentlastungsöffnung in axialer Richtung herausbewegt bzw. -gehebelt werden.

Der Membrandichtstopfen ist erfindungsgemäß lose in der Druckentlastungsöffnung eingesetzt bzw. angeordnet.

Der Zentralabschnitt des Membrandichtstopfens weist im nicht-druckbelasteten Zustand eine auf der Mittelachse angeordnete und in axialer Richtung zur Außenseite des Gehäuses weisende (zentrale) Einbuchtung (=Vertiefung) auf. Die Einbuchtung ist durch zwei zentrale Schenkel gebildet, die gemeinsam einen stumpfen und und zum Gehäuseinneren offenen Winkel einschließen. Die zentrale Einbuchtung weist einen Scheitel auf, der in axialer Richtung zwischen den beiden Randabschnitten des Membrandichtstopfens angeordnet ist. Dadurch kann eine definierte Verformung des Zentralabschnitts bei einer Druckbeaufschlagung des Membrandichtstopfens gewährleistet werden, durch die der Randabschnitt in Umfangsrichtung gleichmäßig von der durch die Gehäusewandung gebildeten Dichtfläche in radialer Richtung abgehoben bzw. abgeschält wird.

Der Zentralabschnitt des Membrandichtstopfens weist einen W- förmigen Querschnitt auf. Dadurch kann einerseits die vorgenannte zentrale Einbuchtung des Zentralabschnitts realisiert werden. Darüber hinaus kann dadurch eine für die Dichtfunktion des Membrandichtungselements erforderliche Aussteifung des Membrandichtstopfens in radialer Richtung ermöglicht werden. Eine erwünschte Kontaktpressung des Randabschnitts gegen die Gehäusewandung kann dadurch vereinfacht eingestellt werden.

Der Membrandichtstopfen ist nach der Erfindung bevorzugt einstückig ausgebildet. Dadurch kann der Membrandichtstopfen kostengünstig und mit sehr geringen Fertigungstoleranzen hergestellt werden, um eine passgenaue und in Umfangsrichtung gleichmäßig dichtende Anlage an der Gehäusewandung des Gehäuses zu gewährleisten.

Es versteht sich, dass der Membrandichtstopfen aufgrund des für sein Dichtungsvermögen erforderlichen radialen Übermaßes relativ zur Druckentlastungsöffnung nach seinem Einbau in die Druckentlastungsöffnung zunächst einem gewissen Druckverformungsrest unterliegt. Dies ist ein den Elastomeren innewohnendes Verhalten und muss bei der Materialauswahl sowie der Dimensionierung des Membrandichtstopfens entsprechend berücksichtigt werden.

Der Membrandichtstopfen weist bevorzugt eine einheitliche Dicke oder im Wesentlichen eine einheitliche Dicke auf. Im letztgenannten Fall variiert die Dicke des Membrandichtstopfens vorzugsweise maximal um 30% der Nenndicke (=mittlere Dicke) des Membrandichtstopfens.

Unter fertigungstechnischen Aspekten ist der Membrandichtstopfen zur Mittelachse bevorzugt rotationssymmetrisch ausgebildet.

Die Montage des Gehäuses bzw. des Membrandichtstopfens kann dadurch nochmals weiter erleichtert werden, dass die Gehäusewandung, die die Druckentlastungsöffnung begrenzt, einen Axialanschlag für die Membrandichtstopfen ausbildet. Dadurch kann eine gewünschte Einführtiefe des Membrandichtstopfens in die Druckentlastungsöffnung auf konstruktiv einfache Weise vorgegeben werden. Dies ist insbesondere im Hinblick auf das Zusammenwirken des Randabschnitts mit der vorstehend erläuterten Gehäusekante von Vorteil.

Nachfolgend wird die Erfindung anhand eines in der Zeichnung wiedergegebenen Ausführungsbeispiels näher erläutert. In der Zeichnung zeigen:
- Fig. 1: ein Gehäuse für einen Energiespeicher mit einer Überdrucksicherung mit einer Druckentlastungsöffnung, die mittels eines in der Druckentlastungsöffnung eingesetzten Membrandichtstopfens fluiddicht verschlossen ist, in einer perspektivischen Ansicht;
- Fig. 2: das Gehäuse aus Fig. 1 im nicht druckbelasteten Zustand der Überdrucksicherung, in einer ausschnittsweisen Schnittdarstellung entlang der in Fig. 1 mit A-A bezeichneten Schnittebene;
- Fig. 3: das Gehäuse aus Fig. 1 bei einem erhöhten Gehäuseinnendruck, in einer ausschnittsweisen Schnittdarstellung;
- Fig. 4: das Gehäuse aus Fig. 1 bei einem gegenüber der Darstellung in Fig. 3 größeren Gehäuseinnendruck, in einer ausschnittsweisen Schnittdarstellung;
- Fig. 5: das Gehäuse aus Fig. 1 bei einem gegenüber der Darstellung in Fig. 4 nochmals größeren Gehäuseinnendruck, in einer ausschnittsweisen Schnittdarstellung; und
- Fig. 6: das Gehäuse aus Fig. 1 im Zeitpunkt der Druckentlastung bei Erreichen eines vorgegebenen maximalen Gehäuseinnendrucks, in dem der Membrandichtstopfen die Druckentlastungsöffnung freigibt, in einem ausschnittsweisen Querschnitt.

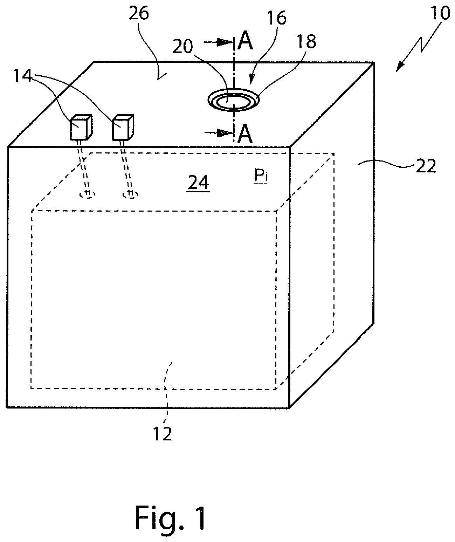

**Figur 1** zeigt ein Gehäuse **10** für einen Lithium-Ionen-Akkumulator **12,** mithin ein sogenanntes Batteriegehäuse. Es versteht sich, dass das Gehäuse 10 auch bei anderen technischen Anwendungen eingesetzt werden kann.

Das Gehäuse 10 weist zwei Anschlusspole **14** zum Anschluss des Lithium-Ionen-Akkumulators 12 an einen in der Zeichnung nicht wiedergegebenen elektrischen Verbraucher, beispielsweise an das Bordnetz eines Kraftfahrzeugs, auf. Das Gehäuse 10 ist mit einer einmal einsatzfähigen Überdrucksicherung **16** mit einer Druckentlastungsöffnung **18** und mit einem in der Druckentlastungsöffnung 18 im Dichtsitz angeordneten Membrandichtstopfen **20** versehen. Der Membrandichtstopfen 20 verschließt die Druckentlastungsöffnung 18 fluiddicht.

Die Druckentlastungsöffnung 18 durchgreift die Gehäusewand **22** des Gehäuses und erstreckt sich vom Gehäuseinneren **24** zur Gehäuseaußenseite **26.** Der Membrandichtstopfen 20 ist derart ausgelegt, dass dieser bei Erreichen eines vorgegebenen maximalen Gehäuseinnendrucks **Pᵢ** die Druckentlastungsöffnung 18 freigibt, d.h. das Gehäuseinnere 24 und die Gehäuseaußenseite 26 bzw. eine das Gehäuse 10 umgebenden Atmosphäre fluidisch miteinander verbindet.

Der Membrandichtstopfen 20 besteht aus einem Elastomer, d.h. aus einem gummielastisch verformbaren Material.

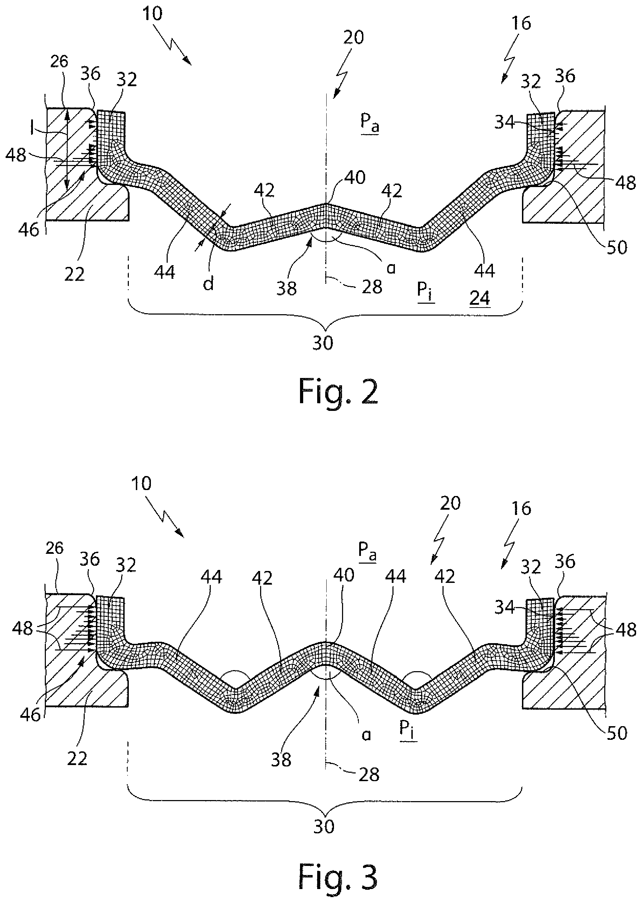

In **Fig. 2** ist das Gehäuse ausschnittsweise in einem Schnitt entlang der in Fig. 1 mit A-A bezeichneten Schnittebene wiedergegeben. Das Gehäuse 10 bzw. der Membrandichtstopfen 20 sind im nicht-druckbeaufschlagten Betriebszustand gezeigt. Der Gehäuseinnendruck Pᵢ entspricht mithin einem atmosphärischen Umgebungsdruck **Pₐ.**

Der Membrandichtstopfen 20 ist vorliegend einstückig ausgeführt und zu seiner Mittelachse **28** rotationssymmetrisch ausgebildet. Der Membrandichtstopfen weist einen mit **30** bezeichneten Zentralabschnitt und ein abgewinkelten freien Randabschnitt **32** auf. Der Zentralabschnitt 30 überdeckt die Druckentlastungsöffnung 18. Wie aus Fig. 2 hervorgeht, erstreckt sich der Randabschnitt 32 im nicht-druckbeaufschlagten Betriebszustand vom Zentralabschnitt 30 in axialer Richtung nach außen, d.h. in Richtung der Gehäuseaußenseite 26, vom Zentralabschnitt 30 des Membrandichtstopfens 20 weg.

Der Membrandichtstopfen 20 liegt über seinen freien Randabschnitt 32 in einer zur Mittelachse 28 des Membrandichtstopfens 20 radialen Richtung an einer die Druckentlastungsöffnung 18 begrenzenden Gehäusewandung **34** vollumfänglich dichtend an. Der freie Randabschnitt 32 hat somit die Funktion einer Dichtlippe. Zu beachten ist, dass der freie Randabschnitt 32 des Membrandichtstopfens 20 im nicht druckbeaufschlagten Betriebszustand nicht etwa linienförmig, sondern über einen Großteil seiner Längserstreckung **l**, an der Gehäusewandung 34 dichtend anliegt.

Der Membrandichtstopfen 20 kann insgesamt eine einheitliche Dicke **d** aufweisen. Im gezeigten Ausführungsbeispiel weist der freie Randabschnitt 32 eine etwas größere Dicke d auf, als der Zentralabschnitt 30. Ein Dickenunterschied der beiden Abschnitte beträgt vorzugsweise maximal 30%.

Der freie Randabschnitt 32 des Membrandichtstopfens 20 erstreckt sich im druckunbelasteten Zustand in axialer Richtung zumindest bis zu einer Gehäusekante **36** oder im Wesentlichen bis zur Gehäusekante 36, über die die Druckentlastungsöffnung 18 seitlich begrenzende Gehäusewandung 34 und die Gehäuseaußenseite 26 des Gehäuses 10 zusammenstoßen. Die Gehäusekante 36 kann, wie dies in Fig. 2 gezeigt ist, gerundet ausgeführt sein. Der freie Randabschnitt 32 des Membrandichtstopfens 20 kann sich in axialer Richtung auch über die Gehäuseaußenseite 26 des Gehäuses 10 hinauserstrecken.

Der Membrandichtstopfen 20 weist im nicht-druckbelasteten Zustand einen im Wesentlichen C-förmigen Querschnitt auf. Der Zentralabschnitt 30 des Membrandichtstopfens 20 weist dabei für ein ausreichendes Dichtungsvermögen sowie eine gleichmäßige Kontaktpressung des Randabschnitts 32 gegen die Gehäusewandung 34 einen zickzackförmig bzw. hier insgesamt W-förmigen, Querschnitt auf. Der Zentralabschnitt 30 weist dadurch eine auf der Mittelachse 28 des Membrandichtstopfens 20 angeordnete und zur Gehäuseaußenseite 26 weisende bzw. vorspringende zentrale Einbuchtung **38** auf. Einen Scheitel **40** der Einbuchtung ist in axialer Richtung zwischen den beiden Randabschnitten 32 des Membrandichtstopfens 20 angeordnet. Die Einbuchtung 38 des Zentralabschnitts 30 ist durch zwei zentrale Schenkel **42** gebildet, die gemeinsam einen stumpfen und zum Gehäuseinneren offenen Winkel **α** einschließen. Die beiden zentralen Schenkel 40 sind jeweils über einen abgewinkelten peripheren (radial äußeren) Schenkel **44** mit dem freien Randabschnitt 32 verbunden.

Ein Kontaktpressungsverlauf **46** des an der Gehäusewandung 34 in radialer Richtung vorgespannt dichtend anliegenden Randabschnitts 32 des Membrandichtstopfens 20 ist in Figur 2 mit Pfeilen verdeutlicht. Ein Maximum **48** der Kontaktpressung ist in axialer Richtung nahe dem Gehäuseinneren angeordnet. Die Kontaktpressung verringert sich in Richtung der Gehäuseaußenseite 26.

Ein stufenartiger Axialanschlag **50** der Gehäusewandung für den Membrandichtstopfen 20 definiert eine maximale Einbautiefe des Membrandichtstopfens 20 in der Druckentlastungsöffnung 18.

Bei einem Anstieg des Gehäuseinnendrucks Pi d.h. einer innenseitigen Druckbeaufschlagung des Membrandichtstopfens 20, wird der Zentralabschnitt 30 des Membrandichtstopfens 20 axial in Richtung auf die Gehäuseaußenseite 26 gedrückt, d.h. in axialer Richtung relativ zum Randabschnitt 32 des Membrandichtstopfens 20 elastisch nach außen verformt. Der Randabschnitt 32 wird dabei aufgrund des dem Material des Membrandichtstopfens 20 innewohnenden Elastizität mit einer radial nach innen gerichteten Zugspannung beaufschlagt und in axialer Richtung fortschreitend von innen nach außen von der Gehäusewandung (in radialer Richtung) abgelöst bzw. abgeschält, bis der Membrandichtstopfen 20 bei Erreichen oder Überschreiten eines definierten maximalen Gehäuseinnendrucks Pi vollständig aus seinem Dichtsitz innerhalb der Druckentlastungsöffnung 18 entfernt ist und die Druckentlastungsöffnung freigibt. In diesem Zeitpunkt ist das Gehäuseinnere 24 mit der Gehäuseaußenseite 26 bzw. der das Gehäuse 10 umgebenden Atmosphäre fluidisch verbunden und mithin ein Druckausgleich bzw. eine Druckentlastung des Gehäuseinneren ermöglicht. Dieser Druckentlastungsprozess wird nachfolgend anhand der Darstellungen in den Figuren 3 bis 5 näher erläutert.

In **Figur 3** ist das Gehäuse 10 beispielhaft bei einem Gehäuseinnendruck Pi mit Pi = 1,2 bar, d.h. bei einer innenseitigen Druckbeaufschlagung des Membrandichtstopfens 20 gegenüber dem Umgebungsdruck Pₐ mit einem Differenzdruck von 200 mbar, gezeigt. Gut zu erkennen ist die zur Mittelachse 28 spiegelsymmetrische und axialgerichtete Verformung des Zentralabschnitts 30 des Membrandichtstopfens 20 in Richtung auf die Gehäuseaußenseite 26.

Der Kontaktpressungsverlauf des an der Gehäusewandung dichtend anliegenden freien Randabschnitts zeigt zwei Maxima 48, die in axialer Richtung voneinander beabstandet sind. Die Druckausgleichsöffnung 18 ist durch den Membrandichtungsstopfen 20 weiterhin fluiddicht verschlossen.

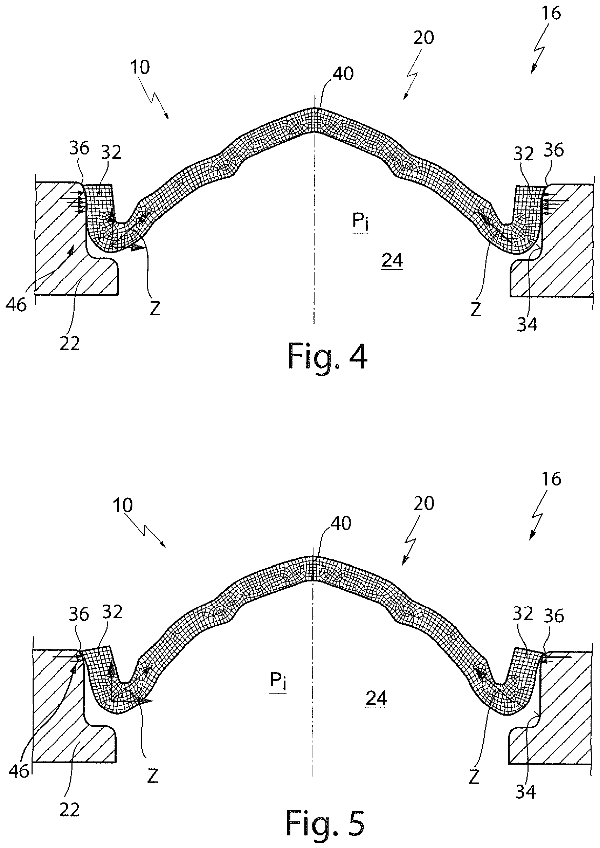

**Figur 4** zeigt das Gehäuse 10 im Bereich der Überdrucksicherung 16 bei einem im Vergleich zu Fig. 3 größeren Gehäuseinnendruck Pi mit Pi = 1,220 bar, d.h. bei einer Druckbeaufschlagung des Membrandichtstopfen 20 mit einem Differenzdruck von 220 mbar. Der Zentralabschnitt 30 des Membrandichtstopfens 20 ist mit seinem Scheitel 40 in axialer Richtung durch den Randabschnitt 32 hindurch nach außen verformt. Eine am Randabschnitt 32 angreifende Zugspannung des Zentralabschnitts ist mit dem Pfeil **Z** bezeichnet. Axial und radial wirkende Kraftkomponenten der Zugspannung sind mit nicht näher bezeichneten Pfeilen verdeutlicht. Der in Fig. 1 gezeigte zickzackförmige Querschnitt des nicht-druckbelasteten Membrandichtstopfens 20 ist im Wesentlichen aufgehoben (verstrichen).

Der freie Randabschnitt 32 weist einen Kontaktpressungsverlauf mit nur einem Maximum 48 auf, das im Gegensatz zu dem nicht-druckbelasteten Betriebszustand gemäß Figur 1 nunmehr im Bereich des freien Endes des Randabschnitts 32 angeordnet ist.

Der freie Randabschnitt 32 ist größtenteils von der Gehäusewandung 34 entfernt bzw. abgehoben.

In **Figur 5** beträgt der Gehäuseinnendruck Pᵢ des Gehäuses beispielhaft 1,222 bar. Der Membrandichtstopfen 20 ist somit im Gegensatz zu dem in Figur 4 wiedergegebenen Betriebszustand mit einem nochmals größeren Differenzdruck, hier 222 mbar, beaufschlagt. Der freie Randabschnitt 32 ist beinahe vollständig von der Gehäusewandung 34 abgeschält und liegt nur noch im Bereich der Gehäusekante 36 an der Gehäusewandung 34 linienförmig bzw. im Wesentlichen linienförmig, an. Der Zentralabschnitt 30 ist teleskopartig durch den freien Randabschnitt 32 nach außen vorgestülpt.

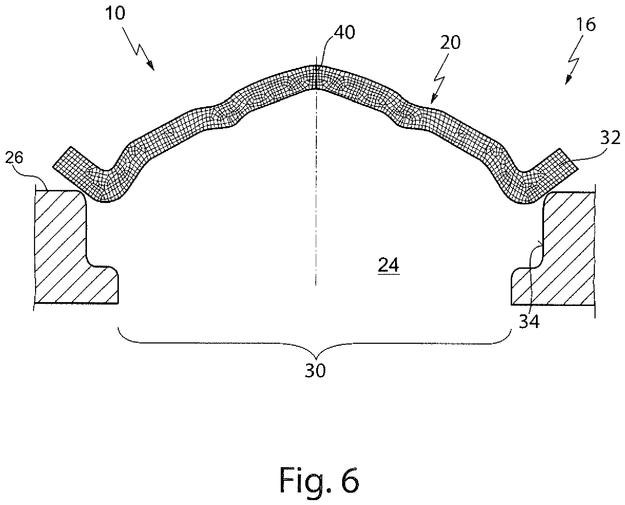

In **Figur 6** ist das Gehäuse im Zeitpunkt des Erreichens eines vorgegebenen maximalen Gehäuseinnendrucks Pᵢ, d.h. beim Erreichen des Öffnungsdrucks des Membrandichtstopfens 20, gezeigt. Der Membrandichtstopfen 20 ist in axialer Richtung aus seinem Dichtsitz bzw. seiner Einbauposition aus der Druckentlastungsöffnung 18 herausbewegt und gibt diese frei. Dadurch ist ein Druckausgleich zwischen dem Gehäuseinneren 24 und der Gehäuseaußenseite bzw. einer das Gehäuse 10 umgebenden Atmosphäre, ermöglicht. Der Membrandichtstopfen 20 kann sich aufgrund des in axialer Richtung über die Gehäusekante 36 bewegten (gehebelten) freien Randabschnitts 32 in radialer Richtung entspannen.

Aufgrund der baulichen Ausgestaltung des Membrandichtrings 20 kann der freie Randabschnitt des Membrandichtstopfens 20 somit durch eine zunehmende Druckbeaufschlagung des Membrandichtstopfens 20 in axialer Richtung von innen nach außen fortschreitend druckproportional von der Gehäusewandung 34 abgelöst und der Membrandichtstopfen 20 dadurch bei Erreichen oder Überschreiten eines definierten maximalen Gehäuseinnendrucks Pi aus seinem Dichtsitz bewegt werden, ohne dass hierzu zwischen dem Membrandichtstopfen 20 und der Gehäusewandung 34 existierende Reibkräfte durch eine reine Axialbewegung des Randabschnitts (Haftreibung) überwunden werden müssen. Dadurch kann bei dem Gehäuse 10 ein maximaler Gehäuseinnendruck Pi erstmals bei Einsatz eines gummielastischen Stopfens zuverlässig eingehalten werden.

## Patentansprüche

1. Gehäuse (10) mit einer Überdrucksicherung (16), umfassend eine Druckentlastungsöffnung (18), die sich vom Gehäuseinneren (24) zur Gehäuseaußenseite (26) erstreckt, und einen Membrandichtstopfen (20) aus einem gummielastischen Material, der in der Druckentlastungsöffnung im Dichtsitz angeordnet ist, um diese fluiddicht zu verschließen, wobei der Membrandichtstopfen (20) lose in der Druckentlastungsöffnung angeordnet ist,
und einen Zentralabschnitt (30) und einen abgewinkelten freien Randabschnitt (32) aufweist, über den der Membrandichtstopfen (20) in einer zur Mittelachse (28) des Membrandichtstopfens (20) radialen Richtung an einer die Druckentlastungsöffnung (18) begrenzenden Gehäusewandung (34) vollumfänglich dichtend anliegt, wobei sich der freie Randabschnitt (32) im nicht-druckbelasteten Betriebszustand des Membrandichtstopfens (20) vom Zentralabschnitt (30) in Richtung der Gehäuseaußenseite (26) wegerstreckt, und in axialer Richtung bis zur Gehäuseaußenseite (36) erstreckt oder über die Gehäuseaußenseite (36) hervorsteht,
**dadurch gekennzeichnet, dass**
sich eine radiale Kontaktpressung (46) des freien Randabschnitts (32) des Membrandichtstopfens (20) gegen die Gehäusewandung (34) im nicht-druckbelasteten Betriebszustand des Membrandichtstopfens (20) axial in Richtung der Gehäuseaußenseite (26) verringert,
wobei der Zentralabschnitt (30) im nicht-druckbelasteten Zustand im Querschnitt W-förmig ausgebildet ist und eine auf der Mittelachse (28) angeordnete und in axialer Richtung zur Außenseite des Gehäuses (10) weisende zentrale Einbuchtung (38) mit einem Scheitel (40) aufweist, der in axialer Richtung zwischen den beiden Randabschnitten (32) des Membrandichtstopfens (20) angeordnet ist, wobei die Einbuchtung (38) des Zentralabschnitts (30) durch zwei zentrale Schenkel (42) gebildet ist, die gemeinsam einen stumpfen und zum Gehäuseinneren (24) offenen Winkel α einschließen und
wobei der Zentralabschnitt (30) durch einen steigenden Gehäuseinnendruck (Pi) in axialer Richtung derart verformbar ist, dass der Randabschnitt (32) durch eine aus der Verformung des Zentralabschnitts (30) abgeleitete Zugspannung (Z) druckproportional in axialer Richtung von innen nach außen fortschreitend von der Gehäusewandung (34) ablösbar ist, bis der Membrandichtstopfen (20) die Druckentlastungsöffnung (18) bei Erreichen oder Überschreiten eines vorgegebenen maximalen Gehäuseinnendrucks (Pᵢ) freigibt.

2. Gehäuse nach Anspruch 1, **dadurch gekennzeichnet, dass** der Membrandichtstopfen (20) einstückig ausgebildet ist.

3. Gehäuse nach Anspruch 1 oder 2, **dadurch gekennzeichnet, dass** der Membrandichtstopfen (20) einen einheitliche Dicke (d) oder eine im Wesentlichen einheitliche Dicke (d) aufweist.

4. Gehäuse nach einem der vorhergehenden Ansprüche, **dadurch gekennzeichnet, dass** der Membrandichtstopfen (20) zu seiner Mittelachse (28) rotationssymmetrisch ausgebildet ist.

5. Gehäuse nach einem der vorhergehenden Ansprüche, **dadurch gekennzeichnet, dass** der Membrandichtstopfen (20) in der Druckentlastungsöffnung allein reibschlüssig gehalten angeordnet ist.

6. Gehäuse nach einem der vorhergehenden Ansprüche, **gekennzeichnet durch** einen Axialanschlag (50) für die Membrandichtstopfen (20).

7. Gehäuse nach einem der vorhergehenden Ansprüche, **dadurch gekennzeichnet, dass** das Gehäuse (10) ein Batteriegehäuse ist.

## Claims

1. Housing (10) having an overpressure safety means (16), comprising a pressure relief opening (18) that extends from the housing interior (24) to the housing outer side (26), and
a membrane sealing stopper (20) made of a rubber-elastic material and arranged in the pressure relief opening in the sealing seat in order to close said opening in a fluid-tight manner,
the membrane sealing stopper (20) being arranged loosely in the pressure relief opening, and having a central portion (30) and an angled free rim portion (32) by means of which the membrane sealing stopper (20) sealingly abuts, in a direction that is radial with respect to the central axis (28) of the membrane sealing stopper (20), the entire circumference of the housing wall (34) which defines the pressure relief opening (18), the free rim portion (32) in the non-pressure-loaded operating state of the membrane sealing stopper (20) extending away from the central portion (30) in the direction of the housing outer side (26) and in the axial direction extending as far as the housing outer side (36) or protruding beyond the housing outer side (36),
**characterised in that**
a radial contact compression (46) of the free rim portion (32) of the membrane sealing stopper (20) against the housing wall (34) in the non-pressure-loaded operating state of the membrane sealing stopper (20) decreases axially in the direction of the housing outer side (26),
the central portion (30) in the non-pressure-loaded state having a W-shaped cross section and a central indentation (38) that is arranged on the central axis (28) and points axially in the direction of the outer side of the housing (10) and which has an apex (40) which is arranged in the axial direction between the two rim portions (32) of the membrane sealing stopper (20),
the indentation (38) in the central portion (30) being formed by two central legs (42) that together form an obtuse angle α that is open towards the housing interior (24) and
the central portion (30) being deformable in the axial direction by means of an increasing housing internal pressure (Pi) in such a way that the rim portion (32) can be gradually detached, in proportion to pressure, from the inside of the housing wall (34) to the outside in the axial direction by a tensile stress (Z) derived from the deformation of the central portion (30), until the membrane sealing stopper (20) unblocks the pressure relief opening (18) upon a predefined maximum housing internal pressure (Pᵢ) being met or exceeded.

2. Housing according to claim 1, **characterised in that** the membrane sealing stopper (20) is designed as a single piece.

3. Housing according to either claim 1 or claim 2, **characterised in that** the membrane sealing stopper (20) has a uniform thickness (d) or a substantially uniform thickness (d).

4. Housing according to any one of the preceding claims, **characterised in that** the membrane sealing stopper (20) is designed to be rotationally symmetrical with respect to the central axis (28) thereof.

5. Housing according to any one of the preceding claims, **characterised in that** the membrane sealing stopper (20) is arranged so as to be held in the pressure relief opening by friction alone.

6. Housing according to any one of the preceding claims, **characterised by** an axial stop (50) for the membrane sealing stopper (20).

7. Housing according to any one of the preceding claims, **characterised in that** the housing (10) is a battery housing.

## Revendications

1. Boîtier (10) doté d'un dispositif de protection contre la surpression (16), comprenant une ouverture de décharge de pression (18) qui s'étend de l'intérieur de boîtier (24) vers l'extérieur de boîtier (26) et un bouchon d'étanchéité à membrane (20) dans un matériau ayant l'élasticité du caoutchouc qui est disposé dans l'ouverture de décharge de pression en ajustement étanche afin de fermer celle-ci de manière étanche aux fluides, le bouchon d'étanchéité à membrane (20) étant disposé sans serrage dans l'ouverture de décharge de pression et présentant une partie centrale (30) et une partie de bord libre coudée (32) par laquelle le bouchon d'étanchéité à membrane (20) s'applique de manière entièrement étanche dans une direction radiale par rapport à l'axe médian (28) du bouchon d'étanchéité à membrane (20) contre une paroi de boîtier (34) délimitant l'ouverture de décharge de pression (18), la partie de bord libre (32), dans l'état de fonctionnement non soumis à la pression du bouchon d'étanchéité à membrane (20), s'étendant à partir de la partie centrale (30) dans la direction du côté extérieur de boîtier (26) et s'étendant dans la direction axiale jusqu'au côté extérieur de boîtier (36) ou dépassant du côté extérieur de boîtier (36),
**caractérisé en ce**
**qu'**une pression de contact radiale (46) de la partie de bord libre (32) du bouchon d'étanchéité à membrane (20) contre la paroi de boîtier (34) diminue axialement en direction du côté extérieur de boîtier (26) dans l'état de fonctionnement non soumis à la pression du bouchon d'étanchéité à membrane (20),
la partie centrale (30) étant en forme de W en section transversale dans l'état non soumis à la pression et présentant un renfoncement central (38) disposé sur l'axe médian (28) et orienté dans la direction axiale vers le côté extérieur du boîtier (10), lequel renfoncement présente un sommet (40) disposé dans la direction axiale entre les deux parties de bord (32) du bouchon d'étanchéité à membrane (20), le renfoncement (38) de la partie centrale (30) étant formé par deux branches centrales (42) qui forment ensemble un angle obtus a qui est ouvert vers l'intérieur de boîtier (24) et
la partie centrale (30) étant déformable dans la direction axiale par une pression interne de boîtier (Pi) croissante de telle manière que la partie de bord (32) peut être progressivement détachée de la paroi de boîtier (34) de manière proportionnelle à la pression dans une direction axiale de l'intérieur vers l'extérieur par une contrainte de traction (Z) dérivée de la déformation de la partie centrale (30) jusqu'à ce que le bouchon d'étanchéité à membrane (20) libère l'ouverture de décharge de pression (18) lorsqu'une pression interne de boîtier (Pi) maximale prédéfinie est atteinte ou dépassée.

2. Boîtier selon la revendication 1, **caractérisé en ce que** le bouchon d'étanchéité à membrane (20) est formé d'une seule pièce.

3. Boîtier selon la revendication 1 ou 2, **caractérisé en ce que** le bouchon d'étanchéité à membrane (20) présente une épaisseur uniforme (d) ou une épaisseur sensiblement uniforme (d).

4. Boîtier selon l'une des revendications précédentes, **caractérisé en ce que** le bouchon d'étanchéité à membrane (20) est conçu à symétrie de révolution par rapport à son axe médian (28).

5. Boîtier selon l'une des revendications précédentes, **caractérisé en ce que** le bouchon d'étanchéité à membrane (20) est maintenu uniquement par friction dans l'ouverture de décharge de pression.

6. Boîtier selon l'une des revendications précédentes, **caractérisé par** une butée axiale (50) pour le bouchon d'étanchéité à membrane (20).

7. Boîtier selon l'une des revendications précédentes, **caractérisé en ce que** le boîtier (10) est un boîtier de batterie.
